# EUROPÄISCHE PATENTSCHRIFT

(11) **EP 2 593 775 B1**
(45) Veröffentlichungstag und Bekanntmachung des Hinweises auf die Patenterteilung: **24.12.2014**
(21) Anmeldenummer: 11730668.8
(22) Anmeldetag: 08.07.2011
(51) Int. Cl.: G01N 21/956, G01B 11/24, G01B 11/30, G01N 21/47

(54) **VORRICHTUNG ZUR PRÜFUNG VON MIKROSTRUKTURIERUNGSQUALITÄT**
DEVICE FOR EXAMINING THE QUALITY OF MICROSTRUCTURING
DISPOSITIF POUR L'EXAMEN DE QUALITÉ DE MICROSTRUCTURATION

(30) Priorität: 12.07.2010 DE 102010031227
(43) Veröffentlichungstag der Anmeldung: 22.05.2013
(73) Patentinhaber: Fraunhofer-Gesellschaft zur Förderung der angewandten Forschung e.V., 80686 München (DE)
(72) Erfinder: MEYER, Udo, 28777 Bremen (DE); MARTIN, Susanne, 28211 Bremen (DE); DIECKHOFF, Stefan, 28865 Lilienthal (DE)
(74) Vertreter: Eisenführ Speiser
(86) Internationale Anmeldenummer: PCT/EP2011/061699
(87) Internationale Veröffentlichungsnummer: WO 2012/007404

(56) Entgegenhaltungen:
- EP-A2- 1 065 499
- US-A- 4 598 997
- US-A- 5 276 498
- US-A1- 2003 132 405

## Beschreibung

Die Erfindung betrifft eine Vorrichtung zur Prüfung von Mikrostrukturierungsqualität einer Oberfläche bei bekannter Zielmikrostrukturierungsqualität. Sie betrifft ferner eine Anordnung umfassend eine solche Vorrichtung und eine Mikrostrukturierungsvorrichtung. Die Erfindung betrifft außerdem ein Verfahren zur Prüfung der Mikrostrukturierungsqualität einer Oberfläche bei bekannter Zielmikrostrukturierungsqualität und ein Verfahren zum Mikrostrukturieren einer Oberfläche. Sie betrifft des Weiteren die Verwendung einer erfindungsgemäßen Vorrichtung zur Prüfung der Mikrostrukturierungsqualität einer Oberfläche sowie die Verwendung einer erfindungsgemäßen Anordnung zum Mikrostrukturieren einer Oberfläche, wobei gleichzeitig eine Qualitätsprüfung und gegebenenfalls eine Steuerung der Arbeitsweise der Mikrostrukturierungsvorrichtung bei Unterschreiten eines Qualitätsmindeststandards erfolgen kann.

Durch eine geeignete dreidimensionale Ausgestaltung von Oberflächen im Submillimeterbereich ist es möglich, die Oberflächen mit bestimmten Eigenschaften zu versehen. Bekannt ist hierbei zum Beispiel der Lotuseffekt, der bewirkt, dass Flüssigkeiten von Oberflächen leichter abperlen. Solche dreidimensionalen Strukturierungen im Submillimeterbereich (Mikrostrukturierung) sind im Idealfall regelmäßig wiederkehrende Muster Diese werden auch als Ribletstrukturen bezeichnet. Solche Strukturen sind insbesondere interessant im Bereich der Fahrzeugtechnik und der Turbinentechnik. Hier dienen sie in erster Linie dazu, Reibungswiderstände herabzusetzen. Bevorzugte Einsatzbereiche für solche Mikrostrukturierungen/Ribletstrukturen sind Oberflächen oder Oberflächenabschnitte von Flugzeugen, insbesondere deren Tragflächen und Rumpf, von Schienenfahrzeugen, insbesondere Lokomotiv- und Waggon-Karosserien, Automobilen, Schiffen, insbesondere deren Rümpfe und Antriebschrauben, Windenergieanlagen, insbesondere deren Rotorblätter, Turbinen, insbesondere deren Rotor- und Startorblätter und von Rohrinnenoberflächen, insbesondere für Pipelines.

Damit die Mikrostrukturierungen ihre Funktion erfüllen können, müssen sie in einer Mindestqualität vorliegen. Die Ansprüche hierfür sind in verschiedenen Einsatzbereichen unterschiedlich, besonders hoch sind sie naturgemäß im Bereich der Luftfahrt. Dementsprechend ist eine Qualitätssicherung der aufgetragenen Ribletstrukturen insbesondere im Luftfahrtbereich wünschenswert, da die dreidimensionalen Ausgestaltungen der Oberfläche im Submillimeterbereich in einigen Einsatzgebieten bis auf wenige Mikrometer maßhaltig sein müssen.

Prinzipiell stehen für die Qualitätssicherung der Mikrostrukturierung eine Reihe von topologieabbildenden Verfahren zur Verfügung, zum Beispiel Fokusvariationsmikroskopie, Streifenlichtprojektion, Niederkohärenzinterferometrie sowie auf der Beugung von Lichtwellen basierende Verfahren. Alle der bisher bekannten Verfahren sind mit einem verhältnismäßig hohen apparativen und/oder zeitlichen Aufwand verbunden, wenn die in der Luftfahrtindustrie geforderte Genauigkeit erfüllt werden soll. Vermutlich aus diesen Gründen wird zurzeit kein entsprechendes Verfahren zur Überwachung der in der Luftfahrtindustrie eingesetzten Strukturen regelmäßig angewendet.

Auf Beugung basierende Verfahren zur Abbildung periodischer Strukturen sind bereits aus anderen technischen Bereichen bekannt. Hier sind zum Beispiel zu nennen die US2008291436A, JP2008058248A, JP2007170827A, DE 102004008474A, WO04068070A und US6914683B.

In der US3748047A wird reflektiertes und gebeugtes Licht verglichen, um Aussagen über die Oberflächenbeschaffenheit zu machen. Es werden auch Maskierungen eingesetzt, das in diesem Dokument offenbarte Verfahren ist jedoch im Zweifelsfall nicht dazu geeignet, eine sehr gute Mikrostrukturierung von einer fehlenden Mikrostrukturierung zu unterscheiden. US 2003/0132405A1 offenbart eine Inspektions-vorrichtung für Wafer.

Vor diesem Hintergrund war es Aufgabe der vorliegenden Erfindung, eine Vorrichtung zur Prüfung von Mikrostrukturierungsqualität einer Oberfläche anzugeben, die apparativ verhältnismäßig einfach aufgebaut ist deren Komponenten preislich verhältnismäßig günstig sind, die einfach zu handhaben ist und/oder in der Lage ist, auch das völlige Fehlen einer Mikrostrukturierung parallel zur Qualitätsbestimmung zu signalisieren.

Diese Aufgabe wird gelöst durch eine Vorrichtung nach Anspruch 1 zur Prüfung von Mikrostrukturierungsqualität einer Oberfläche (2) bei bekannter Zielmlikrostrukturierungsqualität, umfassend eine Strahlungsquelle (1) für kohärente Strahlung, einen ersten Detektor (10), einen zweiten Detektor (4) und eine Maskierung, die so eingerichtet und zueinander angeordnet sind, dass
(a) von der Strahlungsquelle (1) auf eine Oberfläche (2), die mit einer Mikrostrukturierung in Zielqualität versehen ist, ausgesendete Strahlung ein Beugungsmuster ergibt,
(b) das Beugungsmaximum der Ordnung n des Beugungsmusters ohne die Maskierung auf den ersten Detektor (10) fallen würde,
(c) die Maskierung ≥ 80 % der Lichtquanten, die dem Beugungsmaximum der Ordnung n zuzuordnen sind, am Auftreffen auf den ersten Detektor hindert und
(d) das Beugungsmaximum der Ordnung a des Beugungsmusters auf den zweiten Detektor (4) fällt,
wobei n Ausgewählt ist aus der Gruppe bestehend aus 1, 2, 3, 4, 5, 6, 7, 8, 9 und 10 und a Ausgewählt ist aus der Gruppe bestehend aus 1, 2, 3, 4, 5, 6, 7, 8, 9 und 10 und a ≠ n ist.

Mikrostrukturierungen (Ribletstrukturierungen) im Sinne dieser Anmeldung stellen eine räulich/periodische Struktur (Oberflächentopografie) dar. Wie bereits oben angedeutet umfasst diese Oberflächentopografie Strukturelemente im Submillimeterbereich, bevorzugt mit Vertiefungen im Bereich von 0,05 bis 500 µm, weiter bevorzugt 0,5 bis 200 µm, weiter bevorzugt von 5 bis 100 µm und besonders bevorzugt 20 bis 50 µm. Die Abstände benachbarter Höhen in der Oberflächentopografie zu einander betragen bevorzugt 0,05 bis 500 µm, weiter bevorzugt von 5 bis 250 µm und besonders bevorzugt 10 bis 200 µm zu einander. Wenn es sich bei den Höhen um Plateaus handelt, sind die Abstandswerte jeweils von Plateauaußenkante zu benachbarter Plateauaußenkante aufzufassen. Bevorzugte Strukturierungselemente für Mikrostrukturierungen sind Prismen, Plateaus und parabelförmige Rillen.

Erzeugen von Mikrostrukturierung im Sinne dieser Anmeldung bedeutet, dass eine Oberfläche mit einer Mikrostrukturierung versehen wird. Dieses kann beispielsweise durch Prägen von Metall oder Lack erfolgen. Dieses geschieht im Regelfall durch eine Matrize, die ein Negativbild der gewünschten Oberflächentopografie darstellt. Eine weitere Möglichkeit besteht darin, die Oberfläche mit einem Laser ablativ zu strukturieren. Die Struktur kann auch durch direktes Fräsen in die Oberfläche erzeugt werden.

Die "Zielmikrostrukturierungsqualität" im Sinne dieser Anmeldung ist dabei die Qualität, die erreicht wird, wenn die durch die Matrize vorgegebene Oberflächentopografie ohne Fehler auf eine entsprechende Oberfläche übertragen wird. Die Zielmikrostrukturierungsqualität wird im Zweifelsfall direkt an der Matrize bestimmt und auf das Negativ umgerechnet.

"Mikrostrukturierungsqualität" im Sinne der Anmeldung bedeutet dabei das Maß der Abweichung von der Zielmikrostrukturierungsqualität. Anders ausgedrückt: je geringer die Abweichung von der Zielmikrostrukturierungsqualität ist, desto höher ist die Mikrostrukturierungsqualität.

Sofern Mikrostrukturen mit kohärenter Strahlung wie zum Beispiel einem Laserstrahl bestrahlt werden, entsteht neben dem reflektierten Licht auch ein Beugungsmuster.

Eine Maskierung im Sinne der vorliegenden Anmeldung ist bevorzugt eine Vorrichtung, die Strahlung (wenigstens teilweise) daran hindert, in den Raum einzutreten, der aus Ausbreitungsrichtung der Strahlung gesehen hinter der Vorrichtung (Maskierung) liegt.

"Lichtquanten, die einem Beugungsmaximum zuzuordnen sind, sind solche Lichtquanten, die dem Integral unter der Intensitätskurve zuzuordnen sind, wobei das Integral seitlich durch die den Maximum benachbarten Minima begrenzt ist.

Bevorzugte Strahlungsquellen im Sinne der vorliegenden Erfindung sind Laser, insbesondere Diodenlaser.

Die Art der Beugungsmuster (und der dieses Muster darstellenden Beugungsfiguren) wird dabei von der Mikrostrukturierungsqualität beeinflusst. Mikrostrukturierungen mit hoher Qualität liefern ein einfaches Beugungsbild, bei dem die Maxima alle in einer Geraden, bzw. auf einem Kreis liegen und sich der größte Teil der Intensität der gebeugten Strahlung in den Maxima wiederfindet. Eine Abweichung von der Zielmikrostrukturierungsqualität, wie zum Beispiel einer Abrundung von Spitzen, Kratzern, Fehlstellen usw. führt dabei zu einer Änderung der Beugungsfiguren. Dies führt dazu, dass in den ursprünglichen Bereichen maximaler Interisität eine Intensitätsabnahme stattfindet. Dementsprechend wird eine höhere Intensität in Bereichen außerhalb der Maxima messbar sein.

Dies bedeutet, dass ein einfaches Qualitätskriterium die Intensität der gebeugten Strahlung außerhalb der ursprünglichen Intensitätsmaxima darstellt. Die Strahlung kann von der periodischen Struktur der Mikrostrukturierung auf einen Detektor gebeugt werden. Detektor im Sinne der Erfindung ist eine Vorrichtung, die empfindlich für die verwendete Strahlung ist, und in der Lage ist, in Abhängigkeit von der Strahlungsintensität ein Signal zu erzeugen, dass analog zur Strahlungsintensität ist.

In der erfindungsgemäßen Vorrichtung sind ein erster Detektor und ein zweiter Detektor vorgesehen. Der erste Detektor hat dabei die Funktion, bei vorliegender Mikrostrukturierung die Abweichung von der Zielstrukturierungsqualität zu bestimmen. Um hier eine verbesserte Signalstärke zu erzielen, ist es in erfindungsgemäßen Vorrichtungen vorgesehen, dass eine Maskierung ≥ 80 % der Strahlungsquanten bevorzugt ≥ 85 %, weiter bevorzugt ≥ 90 % und besonders bevorzugt ≥ 95 % der Strahlungsquanten, die den Beugungsmaximum der jeweiligen Ordnung n zuzuordnen sind, am Auftreffen auf den ersten Detektor hindert.

Selbstverständlich ist es bevorzugt, dass im Sinne der Anmeldung n = 1 und a = 2, 3 oder 4 ist.

Dadurch, dass für den Fall einer hohen Mikrostrukturierungsqualität ein hoher Anteil von Strahlungsquanten am Auftreffen auf den ersten Detektor gehindert wird, kommt bei Abweichung von der Zielmikrostrukturierungsqualität ein besonders hohes (relatives) Signal auf den ersten Detektor.

In diesem Zusammenhang sei noch einmal betont, dass die mit der erfindungsgemäßen Vorrichtung bestimmte Mikrostrukturierungsqualität immer auch in Relation zur Zielmikrostrukturierungsqualität zu betrachten ist.

Da bei dem Einsatz für die erfindungsgemäße Vorrichtung die Zielmikrostrukturierungsqualität bekannt ist (zum Beispiel die Matrize liegt bereits vor), ist es dem Fachmann leicht, eine den gegebenen Umständen angepasste geeignete Strahlungsquelle auszuwählen. Ferner ist es ihm ohne Schwierigkeiten möglich, die oben beschriebenen Elemente der Vorrichtung so zu einander anzuordnen, dass eine sinnvolle Messung möglich ist. Hier sind insbesondere auch die Abstände der Strahlungsquelle zur zu prüfenden Oberfläche, die Neigung der Strahlung beim Auftreffen auf die zu prüfende Oberfläche, die Entfernung der Detektoren von der zu prüfenden Oberfläche und die Winkel der Detektoren zu der entsprechenden Oberfläche zu nennen.

Die Funktion des zweiten Detektors in der erfindungsgemäßen Vorrichtung liegt darin, sicherzustellen, dass überhaupt eine (Mindest-) Mikrostrukturierung vorliegt. Es könnte nämlich der Fall auftreten, dass in Abwesenheit einer Mikrostrukturierung (oder bei sehr schlechter Mikrostrukturierungsqualität) eine Totalreflektion der auf die Oberfläche gebrachten Strahlung eintritt. Ebenso könnte eine Totalstreuung erfolgen. Dies hätte zur Folge, dass auf dem ersten Detektor ein Signal entstehen würde, das eine hohe Mikrostrukturierungsqualität vortäuschen würde: Außerhalb des (durch die Maskierung abgedeckten) Bereiches des Beugungsmaximums der Ordnung n würde verhältnismäßig wenig Strahlung auf den Detektor fallen und so scheinbar auf das nicht-Vorhandensein von Fehlbeugungen, ausgelöst durch geringe Mikrostrukturierungsqualität, anzeigen. Dementsprechend ist es vorteilhaft, dass der zweite Detektor identifiziert, ob überhaupt Beugungsfiguren vorhanden sind. Selbstverständlich ist es auch möglich, den zweiten Detektor mit einer Maskierung auszustatten, die beispielsweise Strahlungsquanten an einem Auftreffen auf den Detektor hindert, sofern sie Quanten sind, die nicht dem Beugungsmaximum der Beugungsordnung a zuzuordnen sind.

Wie bereits oben angedeutet ist bevorzugt, dass a > n ist.

Erfindungsgemäß bevorzugt ist, dass die Strahlungsquelle auf der zu prüfenden Oberfläche eine Fläche von ≤ 10 cm², bevorzugt ≤ 5 cm², weiter bevorzugt ≤ 1 cm², und besonders bevorzugt ≤ 5 mm² bestrahlt.

Bei einer verhältnismäßig kleinen bestrahlten Fläche ist möglich auch die Qualität der Mikrostrukturierung im Bereich von Krümmungen mit einer hinreichenden Genauigkeit festzustellen. Dabei weiß der Fachmann, dass bei der Mikrostrukturierung von Flächen mit kleinen Krümmungsradien die Strahlungsfläche entsprechend verkleinert werden muss.

Wie ebenfalls bereits oben angedeutet müssen die Lage der Detektoren (und auch ggf. an die Größe der bestrahlten Fläche auf der zu prüfenden Oberfläche) an die jeweilige (Ziel-) Mikrostrukturierung angepasst werden, dies gilt selbstverständlich auch für die Größe und die Lage der jeweiligen Maskierung.

Der Vorteil der erfindungsgemäßen Vorrichtung ist insbesondere darin zu sehen, dass sie in Echtzeit die Mikrostrukturierungsqualität bestimmen kann. Der Aufbau der erfindungsgemäßen Vorrichtung ist einfach und besteht aus wenigen kostengünstigen Komponenten. Es sind keine beweglichen Teile unbedingt erforderlich, ebenso keine komplizierten Optiken. Dementsprechend ist es erfindungsgemäß bevorzugt, dass die erfindungsgemäße Vorrichtung frei von Prismen ist.

Trotz des verhältnismäßigen einfachen Aufbaus führt der Einsatz der erfindungsgemäßen Vorrichtung zu einem sehr empfindlichen Messverfahren für die Mikrostrukturierungsqualität einer Oberfläche, das heißt hier insbesondere für Abweichungen von der Zielmikrostrukturierungsqualität.

Dem oben Gesagten entsprechend ist es erfindungsgemäß bevorzugt, dass der erste Detektor und der zweite Detektor zueinander gewinkelt angeordnet sind.

Gewinkelt bedeutet in diesem Fall, dass sie nicht parallel zueinander sind.

Bei einer geeigneten Auswahl der Winkel zueinander ist somit gewährleistet, dass die Strahlung des jeweiligen für den Detektor entscheidenden Beugungsmaximums (der Ordnung a bzw. der Ordnung n) senkrecht auf den jeweiligen Detektor trifft. Ferner ist es erfindungsgemäß bevorzugt, dass die erfindungsgemäßen Detektoren hinsichtlich ihrer Größe so gewählt werden, dass sie maximal noch im Bereich der Beugungsmaxima der benachbarten Ordnungen (n ± 1 bzw. a ± 1) liegen, wobei bevorzugt selbstverständlich vermieden wird, dass die Strahlung des "Beugungsmaximums" nullter Ordnung auf einen der Detektoren fällt.

Eine bevorzugte erfindungsgemäße Vorrichtung umfasst eine Auswerteeinheit, zum Vergleichen des durch den ersten Detektor erzeugten Signales mit einem Zielwert Z1 und/oder des durch den zweiten Detektors erzeugten Signales mit einem Zielwert Z2.

Der Vorteil einer solchen Bestimmung ist es, dass über ein Ausgabevorrichtung (die bevorzugt ebenfalls Bestandteil der erfindungsgemäßen Vorrichtung ist) es möglich ist, Informationen über die Mikrostrukturierungsqualität bzw. die Abweichung der Mikrostrukturierungsqualität von der Zielmikrostrukturierungsqualität zu übermitteln.

Diese Auswerteeinheit kann beispielsweise ein Computer sein, der die durch die Detektoren erzeugten Signale mit einem zugeordneten Zielwert vergleicht. Dabei handelt es sich bei dem Zielwert Z1 und Z2 jeweils um den Wert, der der Zielmikrostrukturierungsqualität entspricht. Wie bereits oben angedeutet, kann ein solcher Wert in Abhängigkeit von der verwendeten Mikrostrukturierungsmatrize bestimmt werden.

Weiter bevorzugt ist eine erfindungsgemäße Vorrichtung, wobei die Auswerteeinheit zum Vergleichen des durch den ersten Detektor erzeugten Signales mit einem Grenzwert G1 und/oder des durch den zweiten Detektors erzeugten Signales mit einem Grenzwert G2.

Die Grenzwerte G1 und G2 stellen einen von der Zielmikrostrukturierungsqualität abhängigen Schwellenwert dar, bis zu dem eine Abweichung von der Zielmikrostrukturierungsqualität noch tolerierbar ist. Diese Grenzwerte sind abhängig vom Anwendungszweck der Mikrostrukturierung durch den Fachmann wählbar.

Das Bestimmen eines solchen Grenzwertes hat den Vorteil, dass für den Fall, dass er in Richtung einer zu geringeren Mikrostrukturierungsqualität unterschritten wird (bzw. überschritten, je nach Bestimmung des Grenzwertes) ein entsprechendes Warnsignal erzeugt werden kann und/oder eine Nachsteuerung bei der Mikrostrukturierung (siehe auch weiter unten).

Teil der Erfindung ist auch eine Anordnung nach Anspruch 4, umfassend eine erfindungsgemäße Vorrichtung und eine Mikrostrukturierungsvorrichtung.

Eine Mikrostrukturierungsvorrichtung im Sinne dieser Anmeldung ist eine Vorrichtung, die dazu geeignet ist, eine Mikrostrukturierung auf eine Oberfläche aufzubringen. Hierbei kann es sich zum Beispiel um Prägewalzen (für die Mikrostrukturierung von harten Oberflächen) oder Matrizensysteme (für die Mikrostrukturierung von aushärtbaren Oberflächen) handeln.

Der Vorteil einer solchen erfindungsgemäßen Anordnung ist darin zu sehen, dass unmittelbar nach dem Auftragen bzw. Erzeugen einer entsprechenden Mikrostrukturierung deren Qualität geprüft werden kann.

Erfindungsgemäß bevorzugt ist eine erfindungsgemäße Anordnung, die eine erfindungsgemäße Vorrichtung umfasst, wobei die erfindungsgemäße Vorrichtung eine Auswerteeinheit zum Vergleichen des durch den ersten Detektor erzeugten Signales mit einem Zielwert Z1 und einem Grenzwert G1 und/oder zum Vergleichen des durch den zweiten Detektor erzeugten Signales mit einem Zielwert Z2 und einem Grenzwert G2 umfasst. Ferner umfasst die genannte bevorzugte erfindungsgemäße Anordnung eine Steuerleitung zur Übermittlung eines Steuersignals zur Veränderung der Arbeitsweise der Mikrostru ktu rierungsvorrichtu ng.

Die Veränderung der Arbeitsweise erfolgt im Sinne der Erfindung selbstverständlich hin zu einer Erzeugung einer verbesserten Mikrostrukturierungsqualität, zum Beispiel für den Fall, dass einer der Grenzwerte G1 oder G2 in Richtung einer zu geringen Mikrostrukturierungsqualität unterschritten wird. Eine entsprechende Veränderung der Arbeitsweise der Mikrostrukturierungsvorrichtung kann zum Beispiel ein erhöhter Andruck sein (oder ein verringerter Andruck), eine veränderte Arbeitsgeschwindigkeit, eine unterschiedliche Bestrahlungsintensität durch die Aushärtelampen oder eine abweichende Wellenlänge der Bestrahlungslampe.

In diesem Zusammenhang ist dem Fachmann selbstverständlich klar, dass die Mikrostrukturierungsvorrichtung nicht zwingend lediglich die jeweilige Matrize umfasst, sondern noch weitere Elemente umfassen kann wie zum Beispiel Auftragevorrichtungen für aushärtbare Materialien, Aushärtungsvorrichtungen wie zum Beispiel UV-Lampen und flexible Auftragsrollen.

Ferner Bestandteil der Erfindung ist ein Verfahren nach Anspruch 6 zur Prüfung der Mikrostrukturierungsqualität einer Oberfläche bei bekannter Zielmikrostrukturierungsqualität, umfassend die Schritte:
A) Bereitstellen einer erfindungsgemäßen Vorrichtung oder einer erfindungsgemäßen Anordnung ,
B) Bereitstellen einer zu prüfenden Oberfläche,
C) Anordnen der Vorrichtung oder der Anordnung zu der zu prüfenden Oberfläche, so dass im Falle, dass die Oberfläche mit einer Mikrostrukturierung in Zielqualität versehen ist
   (a) von der Strahlungsquelle auf die Oberfläche ausgesendete Strahlung ein Beugungsmuster ergibt,
   (b) das Beugungsmaximum der Ordnung n des Beugungsmusters ohne die Maskierung auf den ersten Detektor fallen würde,
   (c) die Maskierung ≥ 80 % der Strahlungsquanten, die dem Beugungsmaximum der Ordnung n zuzuordnen sind, am Auftreffen auf den ersten Detektor hindert und
   (d) das Beugungsmaximum der Ordnung a des Beugungsmusters auf den zweiten Detektorfällt, und
D) Verarbeiten des durch den ersten Detektor erzeugten Signales und des durch den zweiten Detektor erzeugten Signales.

In diesem Verfahren wird die erfindungsgemäße Vorrichtung sinnvoll eingesetzt. Wie bereits oben angedeutet ist der Schritt C) für den Fachmann - Insbesondere bei bekannter Zielmikrostrukturierungsqualität - ohne Schwierigkeiten vorzunehmen, hier insbesondere auch das Anordnen der Vorrichtung zu der zu prüfenden Oberfläche. Schritt D dient dabei beispielsweise zur Informationsausgabe über ein Anzeigegerät. Beim Verarbeiten werden bevorzugt die Signale der Detektoren mit den Zielwerten Z1, Z2 und/oder den Grenzwerten G1, G2 verglichen.

Ebenfalls Bestandteil der Erfindung ist ein Verfahren zum Mikrostrukturieren einer Oberfläche, umfassend die Schritte:
A)Bereitstellen einer wie oben beschriebene bevorzugte erfindungsgemäßen Anordnung (mit Auswerteinheit zum Vergleich der Zielwerte Z1, Z2, E1 und/oder G2 und Steuerleitung, siehe oben)
B) Bereitstellen einer zu mikrostrukturierenden Oberfläche,
C) Mikrostrukturieren der Oberfläche mit der Anordnung, wobei parallel ein erfindungsgemäßes Verfahren zur Prüfung der Mikrostrukturierungsqualität der (gerade) mikrostrukturierten Oberfläche durchgeführt wird und im Falle des Unterschreitens eines der Grenzwerte G1 oder G2 über eine Steuerleitung (9) eine Übermittlung eines Steuersignales zur Veränderung der Arbeitsweise der Mikrostrukturierungsvorrichtung (16) erfolgt, so dass die Qualität der erzeugten Mikrostrukturierung mehr oder vollständig der Zielmikrostrukturierungsqualität entspricht.

Mit diesem erfindungsgemäßen Verfahren ist es möglich, *in sito* die Mikrostrukturierungsqualität beim Aufbringen zu überwachen und gegebenenfalls in das Mikrostrukturierungsverfahren einzugreifen, so dass bei Unterschreiten einer Mindestqualität der Mikrostrukturierung danach aufgebrachte Mikrostrukturierung der Mindestqualität entspricht oder sogar nahe an der Zielqualität liegt. Selbstverständlich ist es im Sinne der Erfindung auch möglich, bereits bei einem leichten Abweichen von der Zielqualität eine entsprechende Nachsteuerung vorzunehmen, so dass ein ständiger Regelprozess stattfindet.

Teil der Erfindung ist auch eine Verwendung nach Anspruch 8 einer erfindungsgemäßen Vorrichtung oder einer erfindungsgemäßen Anordnung nach Anspruch 9 zur Prüfung von Mikrostrukturierungsqualität einer Oberfläche bei bekannter Zielmikrostrukturierungsqualität sowie eine Verwendung einer erfindungsgemäßen Anordnung zum Mikrostrukturieren einer Oberfläche.

Diese Verwendungen führen zu den jeweils oben beschriebenen Vorteilen.

Nachfolgend wird die Erfindung anhand eines Ausführungsbeispieles und anhand von Figuren näher erläutert.

Es stellen dar:
Fig. 1 eine schematische Darstellung einer erfindungsgemäßen Anordnung,
Fig. 2 einen maskierten Detektor (unten) und ein idealisiertes Beugungsbild einer idealen Riblettstruktur auf dem unmaskierten Detektor (oben) und
Fig. 3 ein idealisiertes Beugungsbild einer gestörten Riblettstruktur auf dem maskierten Detektor (unten) und ein idealisiertes Beugungsbild einer idealen Riblettstruktur auf dem maskierten Detektor.

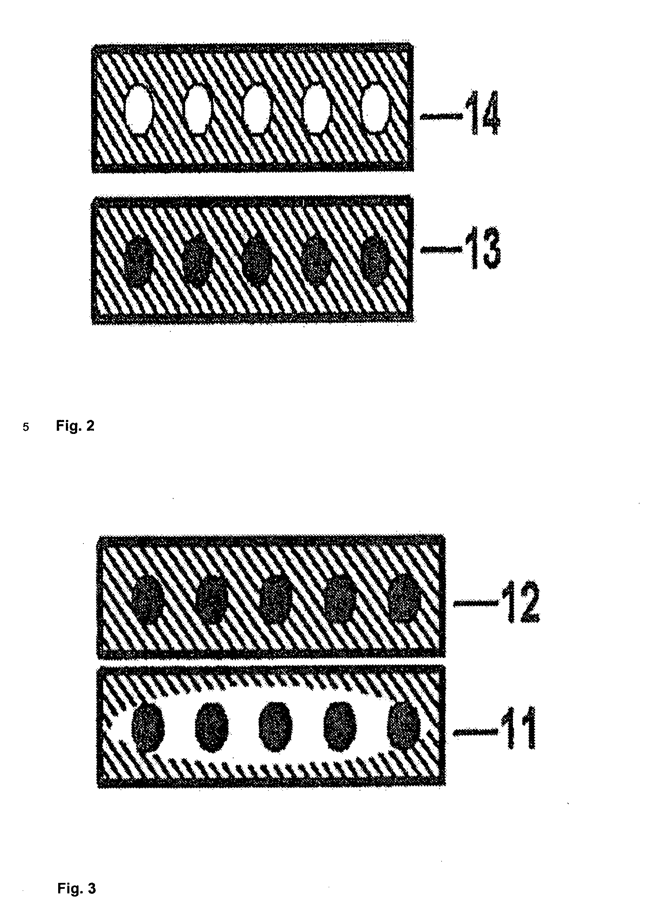

In Fig. 2 und 3 entsprechen die gefüllten schwarzen Punkte (schematisch) jeweils der Maskierung.

In den Abbildungen stellen die Bezugszeichen folgendes dar:
1 Strahlungsquelle, bevorzugt ein Laser,
2 zu prüfende Oberfläche,
3 gebeugte Strahlung, erster Ordnung,
4 Zweiter Detektor,
5 gebeugte Strahlung, höherer Ordnung,
6 Gehäuse,
7 Signalleitung,
8 Auswerteeinheit,
9 Signalleitung,
10 Erster Detektor,
11 idealisiertes Beugungsbild einer Riblettstruktur auf dem maskierten Detektor,
12 idealisiertes Beugungsbild einer idealisierten Riblettstruktur auf dem maskierten Detektor
13 maskierter Detektor,
14 idealisiertes Beugungsbild einer idealen Riblettstruktur auf dem unmaskierten Detektor und
16 Mikrostrukturierungsvorrichtung

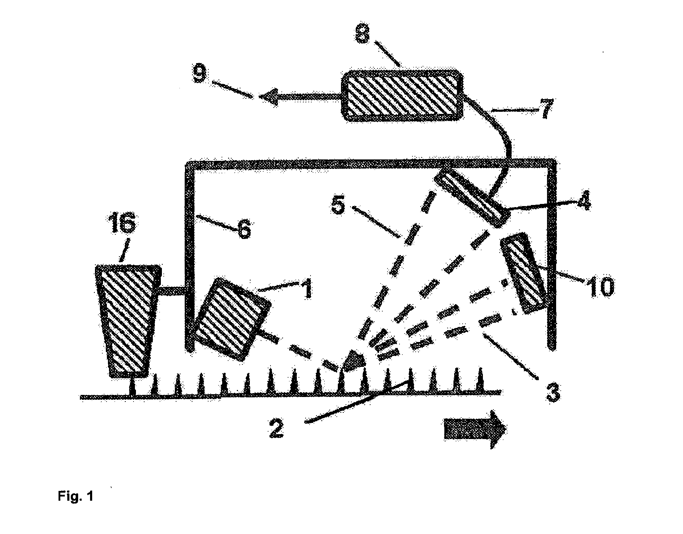

Die Fig. 1 stellt eine einfache und zweckmäßige Ausgestaltung der erfindungsgemäßen Anordnung dar. Wie durch den Pfeil in Fig. 1 angedeutet ist es möglich, dass die erfindungsgemäße Anordnung stationär ist, während die zu strukturierende Oberfläche an der Anordnung vorbeigeführt wird. Selbstverständlich ist es aber auch umgekehrt möglich, die Anordnung über die mikrozustrukturierende Oberfläche zu führen. Mit Bezug auf Fig. 1 sendet die Strahlungsquelle 1, hier ein Laser, Laserlicht einer an die Zielmikrostruktierungsqualität angepassten Wellenlänge auf die zu prüfende Oberfläche. Dieses Licht wird auf der Oberfläche (unter anderem) gebeugt. Dabei sind die Entfernungen und Anordnungen des Lasers 1, der zu prüfenden Oberfläche 2, des ersten Detektors 10 und des zweiten Detektors 4 zueinander so gewählt, dass der erste Detektor 10 im Bereich des gebeugten Strahls erster Ordnung (3) liegt und der zweite Detektor 4 im Bereich des gebeugten Strahls höherer Ordnung (hier zum Beispiel zweiter Ordnung) liegt. Die Vorrichtung ist einem Gehäuse 6 untergebracht und die beiden Detektoren 4, 10 sind über eine Steuerleitung 7 mit einer Auswerteeinheit 8 verbunden (Steuerleitung 7 für den ersten Detektor 10 nicht gezeigt). In Fig. 1 ist der erste Detektor 10 mit einer Maske wie in Bezugszeichen 13 wie in Fig. 2 dargestellt maskiert (in Fig. 1 nicht dargestellt).

Dadurch wird ein wesentlicher Teil der Lichtquanten, die den Beugungsmaximum erster Ordnung zuzuordnen sind vom Zutritt auf den ersten Detektor 10 ausgeschlossen. Dadurch ermittelt der Detektor empfindlich Abweichungen von der Zielmikrostrukturierungsqualität, das heißt Lichtquanten die außerhalb des Beugungsmuster der Zielmikrostrukturierungsqualität liegen würden. Der erste Detektor 10 gibt ein entsprechendes Signal an die Auswerteeinheit 8 weiter. Der zweite Detektor 4 ermittelt, ob ein gebeugter Strahl höherer Ordnung (hier zweiter Ordnung) vorliegt. So wird ermittelt, ob überhaupt ein Beugungsmuster vorliegt und so eine schwere Fehlmikrostrukturierung bzw. ein vollständiges Fehlen der Mikrostrukturierung registriert, für den Fall, dass kein Beugungsmuster vorliegt.

Auch der zweite Detektor 4 gibt ein entsprechendes Signal über die Steuerleitung 7 an die Auswerteinheit 8 weiter. Die Auswerteinheit 8 vergleicht die von Detektoren gemessenen Werte mit den Zielwerten Z1 und Z2, die vorher in Abhängigkeit von der Zielmikrostrukturierungsqualität in die Auswerteeinheit einprogrammiert wurden. Ferner vergleicht die Auswerteinheit 8, ob ein Grenzwert G1 oder G2 in Richtung einer zu geringen Mikrostrukturierungsqualität unterschritten wird. Dies wäre beispielsweise der Fall, wenn der erste Detektor eine zu hohe Lichtintensität misst oder der zweite Detektor eine zu geringe. Auch diese Grenzwerte sind abhängig von der Zielmikrostrukturierungsqualität sowie der tolerablen Abweichung von dieser.

Sofern einer dieser Grenzwerte G1 oder G2 im Sinne einer zu geringen Mikrostrukturierungsqualität unterschritten wird, gibt die Auswerteeinheit 8 über die Signalleitung 9 ein Signal an die Mikrostrukturierungsvorrichtung 16 weiter, mittels dessen die Arbeitsweise der Mikrostrukturierungsvorrichtung 16 so verändert wird, dass sich die Mikrostrukturierungsqualität der Mikrostrukturierung verbessert, die von der Mikrostrukturierungseinheit 16 erzeugt wird.

Dementsprechend wird in einer erfindungsgemäßen Anordnung gemäß Fig. 1 bei sehr grob gestörter Mikrostrukturierung kein nennenswerter Anteil des Lichtes an der Oberfläche gebeugt. In diesem Fall registriert der zweite Detektor 4 ein Fehlen der Beugungsfiguren höherer Ordnung. Wird am zweiten Detektor 4 dagegen eine ausreichende Intensität registriert, so existiert eine Mikrostrukturierung. Sofern der erste Detektor 10 gleichzeitig eine sehr geringe Intensität anzeigt, so handelt es sich um eine Mikrostrukturierung deren Qualität nahe der Zielmikrostrukturierungsqualität liegt. Ist die Intensität am ersten Detektor 10 jedoch zu hoch, ist die Qualität der Mikrostrukturierung unbefriedigend.

Wie oben bereits mehrfach beschrieben werden die Abstände der einzelnen Komponenten zueinander, sowie die Ausgestaltung der Maskierung an die jeweilige Zielmikrostrukturierung bzw. deren Qualität angepasst.

## Patentansprüche

1. Vorrichtung zur Prüfung von Mikrostrukturierungsqualität einer Oberfläche (2) bei bekannter Zielmikrostrukturierungsqualität, umfassend eine Strahlungsquelle (1) für kohärente Strahlung, einen ersten Detektor (10), einen zweiten Detektor (4) und eine Maskierung, **dadurch gekennzeichnet, dass** sie so eingerichtet und zueinander angeordnet sind, dass
(a) von der Strahlungsquelle (1) auf eine Oberfläche (2), die mit einer Mikrostrukturierung in Zielqualität versehen ist, ausgesendete Strahlung ein Beugungsmuster ergibt,
(b) das Beugungsmaximum der Ordnung n des Beugungsmusters ohne die Maskierung auf den ersten Detektor (10) fallen würde,
(c) die Maskierung ≥ 80 % der Strahlungsquanten, die dem Beugungsmaximum der Ordnung n zuzuordnen sind, am Auftreffen auf den ersten Detektor hindert,
(d) das Beugungsmaximum der Ordnung a des Beugungsmusters auf den zweiten Detektor (4) fällt,
wobei n Ausgewählt ist aus der Gruppe bestehend aus 1, 2, 3, 4, 5, 6, 7, 8, 9 und 10 und a ausgewählt ist aus der Gruppe bestehend aus 1, 2, 3, 4, 5, 6, 7, 8, 9 und 10 und a ≠ n ist und
(e) die Vorrichtung eine Auswerteeinheit (8) umfasst, zum Vergleichen des durch den ersten Detektor (10) erzeugten Signales mit einem Zielwert Z1 und/oder des durch den zweiten Detektor erzeugten Signales mit einem Zielwert Z2, wobei es sich bei dem Zielwert Z1 und Z2 jeweils um den Wert, der der Zielmikrostrukturienungsqualität entspricht handelt.

2. Vorrichtung nach Anspruch 1, wobei der erste Detektor (10) und der zweite Detektor (4) zu einander gewinkelt angeordnet sind.

3. Vorrichtung nach Anspruch 2, wobei die Auswerteeinheit (8) zum Vergleichen des durch den ersten Detektor (10) erzeugten Signales mit einem Grenzwert G1 und/oder des durch den zweiten Detektor (4) erzeugten Signales mit einem Grenzwert G2 eingerichtet ist wobei die Grenzwerte G1 und G2 einen von der Zielmikrostrukturierungsqualität abhängigen Schwellenwert darstellen, bis zu den eine Abweichung von der Zielmikrostruktrurierungsqualität noch tolerierbar ist.,

4. Anordnung, umfassend eine Vorrichtung nach einem der Ansprüche 1 bis 3 und eine Mikrostrukturierungsvorrichtung (16).

5. Anordnung nach Anspruch 4, umfassend eine Vorrichtung nach Anspruch 3 und eine Steuerleitung (9) zur Übermittlung eines Steuersignales zur Veränderung der Arbeitsweise der Mikrostrukturierungsvorrichtung (16).

6. Verfahren zur Prüfung der Mikrostrukturierungsqualität einer Oberfläche bei bekannter Zielmikrostrukturierungsqualität, umfassend die Schritte:
A) Bereitstellen einer Vorrichtung
zur Prüfung von Mikrostrukturierungsqualität einer Oberfläche (2) bei bekannter Zielmikrostrukturierungsqualität, umfassend eine Strahlungsquelle (1) für kohärente Strahlung, einen ersten Detektor (10), einen zweiten Detektor (4) und eine Maskierung, **dadurch gekennzeichnet, dass** Sie so eingerichtet und zueinander angeordnet sind, dass
(a) von der Strahlungsquelle (1) auf eine Oberfläche (2), die mit einer Mikrostrukturierung in Zielqualität versehen ist, ausgesendete Strahlung ein Beugungsmuster ergibt,
(b) das Beugungsmaximum der Ordnung n des Beugungsmusters ohne die Maskierung auf den ersten Detektor (10) fallen würde,
(c) die Maskierung ≥ 80 % der Strahlungsquanten, die dem Beugungsmaximum der Ordnung n zuzuordnen sind, am Auftreffen auf den ersten Detektor hindert und
(d) das Beugungsmaximum der Ordnung a des Beugungsmusters auf den zweiten Detektor (4) fällt,
wobei n ausgewählt ist aus der Gruppe bestehend aus 1, 2, 3, 4, 5, 6, 7, 8, 9 und 10 und a ausgewählt ist aus der Gruppe bestehend aus 1, 2, 3, 4, 5, 6, 7, 8, 9 und 10 und a ≠ n ist
oder
Bereitstellen einer Vorrichtung nach einem der Ansprüche 1 bis 3 oder einer Anordnung nach einem der Ansprüche 4 oder 5,
B) Bereitstellen einer zu prüfenden Oberfläche (2),
C) Anordnen der Vorrichtung oder der Anordnung zu der zu prüfenden Oberfläche, so dass im Falle, dass die Oberfläche mit einer Mikrostrukturierung in Zielqualität versehen ist
(a) von der Strahlungsquelle (1) auf die Oberfläche (2) ausgesendete Strahlung ein Beugungsmuster ergibt,
(b) das Beugungsmaximum der Ordnung n des Beugungsmusters ohne die Maskierung auf den ersten Detektor (10) fallen würde,
(c) die Maskierung ≥ 80 % der Strahlungsquanten, die dem Beugungsmaximum der Ordnung n zuzuordnen sind, am Auftreffen auf den ersten Detektor hindert und
(d) das Beugungsmaximum der Ordnung a des Beugungsmusters auf den zweiten Detektor (4) fällt, und
D) Verarbeiten des durch den ersten Detektor (10) erzeugten Signales und des durch den zweiten Detektor erzeugten Signales, umfassend den Vergleich der Signale der Detektoren mit den Zielwerten Z1 und/oder Z2,wobei n ausgewählt ist aus der Gruppe bestehend aus 1, 2, 3, 4, 5, 6, 7, 8, 9 und 10 und a ausgewählt ist aus der Gruppe bestehend aus 1, 2, 3, 4, 5, 6, 7, 8, 9 und 10 und a ≠ n ist.

7. Verfahren zum Mikrostrukturieren einer Oberfläche, umfassend die Schritte:
A) Bereitstellen einer Anordnung nach Anspruch 5,
B) Bereitstellen einer zu mikrostrukturierenden Oberfläche,
C) Mikrostrukturieren der Oberfläche mit der Anordnung, wobei parallel ein Verfahren nach Anspruch 6 durchgeführt wird und im Falle des Unterschreitens eines der Grenzwerte G1 oder G2 über eine Steuerleitung (9) eine Übermittlung eines Steuersignales zur Veränderung der Arbeitsweise der Mikrostrukturierungsvorrichtung (16) erfolgt, so dass die Qualität der erzeugten Mikrostrukturierung mehr oder vollständig der Zielmikrostrukturierungsqualität entspricht, wobei die Grenzwerte G1 und G2 einen von der Zielmikrostrukturierungsqualität abhängigen Schwellenwert darstellen, bis zu dem eine A bweichung von der Zielmikrostrukturierungsqualität noch tolerierbar ist.

8. Verwendung einer Vorrichtung nach einem der Ansprüche 1 bis 3 oder einer Anordnung nach einem der Ansprüche 4 oder 5 zur Prüfung von Mikrostrukturierungsqualität einer Oberfläche (2) bei bekannter Zielmikrostrukturierungsqualität.

9. Verwendung einer Anordnung nach einem der Ansprüche 4 oder 5 zum Mikrostrukturieren einer Oberfläche.

## Claims

1. Device for testing the quality of microstructuring of a surface (2) in the case of known target microstructuring quality, comprising a radiation source (1) for coherent radiation, a first detector (10), a second detector (4) and a masking, **characterised in that** they are set up and arranged with respect to one another so that
(a) radiation emitted by the radiation source (1) onto a surface (2), which is provided with a microstructuring of the target quality, produces a diffraction pattern,
(b) the diffraction maximum of order n of the diffraction pattern would, without the masking, impinge on the first detector (10),
(c) the masking prevents ≥ 80% of the photons that are to be assigned to the diffraction maximum of order n from impinging on the first detector,
(d) the diffraction maximum of order a of the diffraction pattern impinges on the second detector (4),
wherein n is selected from the group consisting of 1, 2, 3, 4, 5, 6, 7, 8, 9 and 10 and a is selected from the group consisting of 1, 2, 3, 4, 5, 6, 7, 8, 9 and 10 and a ≠ n and
(e) the device comprises an evaluating unit, for comparing the signal produced by the first detector (10) with a target value Z1 and/or the signal produced by the second detector with a target value Z2, wherein the target value Z1 and Z2 is in each case the value that corresponds to the target microstructuring quality.

2. Device according to claim 1, wherein the first detector (10) and the second detector (4) are arranged at an angle to one another.

3. Device according to claim 2, wherein the evaluating unit (8) is set up for comparing the signal produced by the first detector (10) with a limit value G1 and/or the signal produced by the second detector (4) with a limit value G2, wherein the limit values G1 and G2 represent a threshold value that depends on the target microstructuring quality, up to which a deviation from the target microstructuring quality can still be tolerated.

4. Arrangement, comprising a device according to one of claims 1 to 3 and a microstructuring device (16).

5. Arrangement according to claim 4, comprising a device according to claim 3 and a control line (9) for communicating a control signal for altering the operating mode of the microstructuring device (16).

6. Method for testing the microstructuring quality of a surface in the case of a known target microstructuring quality, comprising the steps:
A) providing a device
for testing the quality of microstructuring of a surface (2) in the case of known target microstructuring quality, comprising a radiation source (1) for coherent radiation,
a first detector (10), a second detector (4) and a masking, **characterised in that** they are set up and arranged with respect to one another so that
(a) radiation emitted by the radiation source (1) onto a surface (2), which is provided with a microstructuring of the target quality, produces a diffraction pattern,
(b) the diffraction maximum of order n of the diffraction pattern would, without the masking, impinge on the first detector (10),
(c) the masking prevents ≥ 80% of the photons that are to be assigned to the diffraction maximum of order n from impinging on the first detector, and
(d) the diffraction maximum of order a of the diffraction pattern impinges on the second detector (4),
wherein n is selected from the group consisting of 1, 2, 3, 4, 5, 6, 7, 8, 9 and 10 and a is selected from the group consisting of 1, 2, 3, 4, 5, 6, 7, 8, 9 and 10 and a ≠ n
or
providing a device according to one of claims 1 to 3 or an arrangement according to one of claims 4 or 5,
B) providing a surface (2) to be tested,
C) arranging the device or the arrangement with respect to the surface to be tested, so that in the case when the surface is provided with a microstructuring of the target quality
(a) radiation emitted by the radiation source (1) onto the surface (2) produces a diffraction pattern,
(b) the diffraction maximum of order n of the diffraction pattern would, without the masking, impinge on the first detector (10),
(c) the masking prevents ≥ 80% of the photons that are to be assigned to the diffraction maximum of order n, from impinging on the first detector and
(d) the diffraction maximum of order a of the diffraction pattern impinges on the second detector (4), and
D) processing the signal produced by the first detector (10) and the signal produced by the second detector, comprising the comparison of the signals of the detectors with the target values Z1 and/or Z2, wherein n is selected from the group consisting of 1, 2, 3, 4, 5, 6, 7, 8, 9 and 10 and a is selected from the group consisting of 1, 2, 3, 4, 5, 6, 7, 8, 9 and 10 and a ≠ n.

7. Method for microstructuring a surface, comprising the steps:
A) providing an arrangement according to claim 5,
B) providing a surface to be microstructured,
C) microstructuring the surface with the arrangement, wherein in parallel, a method according to claim 6 is carried out and if one of the limit values G1 or G2 is undershot, a control signal is transmitted via a control line (9) for altering the operating mode of the microstructuring device (16), so that the quality of the microstructuring produced corresponds more or completely to the target microstructuring quality, wherein the limit values G1 and G2 represent a threshold value that depends on the target microstructuring quality, up to which a deviation from the target microstructuring quality can still be tolerated.

8. Use of a device according to one of claims 1 to 3 or an arrangement according to one of claims 4 or 5 for testing the quality of microstructuring of a surface (2) in the case of known target microstructuring quality.

9. Use of an arrangement according to one of claims 4 or 5 for microstructuring a surface.

## Revendications

1. Dispositif de vérification de la qualité de microstructuration d'une surface (2), la qualité visée pour ladite microstructuration étant connue, ledit dispositif comprenant une source de rayonnement (1) pouvant émettre un rayonnement cohérent, un premier détecteur (10), un deuxième détecteur (4) et un organe de masquage, **caractérisé en ce que** ces derniers sont conçus et disposés les uns par rapport aux autres de manière à ce que
(a) un rayonnement émis par la source de rayonnement (1) forme un schéma de diffraction lorsqu'il atteint une surface (2) pourvue d'une microstructuration ayant la qualité visée,
(b) le maximum de diffraction d'ordre n du schéma de diffraction, sans mise en place de l'organe de masquage, coïnciderait avec la position du premier détecteur (10),
(c) l'organe de masquage empêche ≥ 80 % des quanta de rayonnement, lesquels peuvent être associés au maximum de diffraction d'ordre n, d'atteindre le premier détecteur,
(d) le maximum de diffraction d'ordre a du schéma de diffraction coïncide avec la position du deuxième détecteur (4),
n étant choisi dans le groupe constitué de 1, 2, 3, 4, 5, 6, 7, 8, 9 et 10, et a étant choisi dans le groupe constitué de 1, 2, 3, 4, 5, 6, 7, 8, 9 et 10, et a ≠ n, et
(e) ledit dispositif comprend une unité d'analyse (8) destinée à comparer le signal généré par le premier détecteur (10) avec une valeur cible Z1 et/ou le signal généré par le deuxième détecteur avec une valeur cible Z2, les valeurs cibles Z1 et Z2 étant chacune égale à la valeur correspondant à la qualité visée pour ladite microstructuration.

2. Dispositif selon la revendication 1, le premier détecteur (10) et le deuxième détecteur (4) formant un angle l'un avec l'autre.

3. Dispositif selon la revendication 2, l'unité d'analyse (8) étant conçue pour comparer le signal généré par le premier détecteur (10) avec une valeur limite G1 et/ou le signal généré par le deuxième détecteur (4) avec une valeur limite G2, les valeurs limites G1 et G2 représentant un seuil, lequel dépend de la qualité visée pour ladite microstructuration et jusqu'auquel un écart de la qualité visée pour ladite microstructuration peut encore être toléré.

4. Système, comprenant un dispositif selon l'une des revendications 1 à 3 et un dispositif de microstructuration (16).

5. Système selon la revendication 4, comprenant un dispositif selon la revendication 3 et une ligne de commande (9) destinée à transmettre un signal de commande permettant de modifier le mode de fonctionnement du dispositif de microstructuration (16).

6. Procédé de vérification de la qualité de microstructuration d'une surface, la qualité visée pour ladite microstructuration étant connue, ledit procédé comprenant les étapes consistant à :
A) fournir un dispositif
destiné à vérifier la qualité de microstructuration d'une surface (2), la qualité visée pour ladite microstructuration étant connue, ledit dispositif comprenant une source de rayonnement (1) pouvant émettre un rayonnement cohérent, un premier détecteur (10), un deuxième détecteur (4) et un organe de masquage, **caractérisé en ce que** ces derniers sont conçus et disposés les uns par rapport aux autres de manière à ce que
(a) un rayonnement émis par la source de rayonnement (1) forme un schéma de diffraction lorsqu'il atteint une surface (2) pourvue d'une microstructuration ayant la qualité visée,
(b) le maximum de diffraction d'ordre n du schéma de diffraction, sans mise en place de l'organe de masquage, coïnciderait avec la position du premier détecteur (10),
(c) l'organe de masquage empêche ≥ 80 % des quanta de rayonnement, lesquels peuvent être associés au maximum de diffraction d'ordre n, d'atteindre le premier détecteur, et
(d) le maximum de diffraction d'ordre a du schéma de diffraction coïncide avec la position du deuxième détecteur (4),
n étant choisi dans le groupe constitué de 1, 2, 3, 4, 5, 6, 7, 8, 9 et 10, et a étant choisi dans le groupe constitué de 1, 2, 3, 4, 5, 6, 7, 8, 9 et 10, et a ≠ n,
ou
fournir un dispositif selon l'une des revendications 1 à 3 ou un système selon l'une des revendications 4 ou 5,
B) fournir une surface (2) à vérifier,
C) disposer ledit dispositif ou ledit système par rapport à ladite surface à vérifier de manière à ce que, si ladite surface est pourvue d'une microstructuration ayant la qualité visée,
(a) un rayonnement émis par la source de rayonnement (1) forme un schéma de diffraction lorsqu'il atteint la surface (2),
(b) le maximum de diffraction d'ordre n du schéma de diffraction, sans mise en place de l'organe de masquage, coïnciderait avec la position du premier détecteur (10),
(c) l'organe de masquage empêche ≥ 80 % des quanta de rayonnement, lesquels peuvent être associés au maximum de diffraction d'ordre n, d'atteindre le premier détecteur, et
(d) le maximum de diffraction d'ordre a du schéma de diffraction qui coïncide avec la position du deuxième détecteur (4), et
D) traiter le signal généré par le premier détecteur (10) et le signal généré par le deuxième détecteur, ledit traitement comprenant la comparaison des signaux des détecteurs avec les valeurs cibles Z1 et/ou Z2, n étant choisi dans le groupe constitué de 1, 2, 3, 4, 5, 6, 7, 8, 9 et 10, et a étant choisi dans le groupe constitué de 1, 2, 3, 4, 5, 6, 7, 8, 9 et 10, et a ≠ n.

7. Procédé de microstructuration d'une surface, comprenant les étapes consistant à :
A) fournir un système selon la revendication 5,
B) fournir une surface à microstructurer,
C) microstructurer ladite surface au moyen dudit système, en mettant en oeuvre parallèlement un procédé selon la revendication 6 et en transmettant à travers une ligne de commande (9), si l'une des valeurs limites G1 ou G2 n'est plus atteinte, un signal de commande permettant de modifier le mode de fonctionnement du dispositif de microstructuration (16) de telle sorte que la qualité de la microstructuration générée corresponde davantage ou complètement à la qualité visée pour ladite microstructuration, les valeurs limites G1 et G2 représentant un seuil, lequel dépend de la qualité visée pour ladite microstructuration et jusqu'auquel un écart de la qualité visée pour ladite microstructuration peut encore être toléré.

8. Utilisation d'un dispositif selon l'une des revendications 1 à 3 ou d'un système selon l'une des revendications 4 ou 5 pour vérifier la qualité de microstructuration d'une surface (2), la qualité visée pour ladite microstructuration étant connue.

9. Utilisation d'un système selon l'une des revendications 4 ou 5 pour microstructurer une surface.
